# EUROPÄISCHE PATENTSCHRIFT

(11) **EP 2 317 164 B1**
(45) Veröffentlichungstag und Bekanntmachung des Hinweises auf die Patenterteilung: **10.09.2014**
(21) Anmeldenummer: 10189613.2
(22) Anmeldetag: 02.11.2010
(51) Int. Cl.: F16B 45/02, F16B 45/04

(54) **Haken, insbesondere für Sicherheitseinrichtungen**
Hook, in particular for safety devices
Crochet, notamment pour dispositifs de sécurité

(30) Priorität: 02.11.2009 DE 102009051594
(43) Veröffentlichungstag der Anmeldung: 04.05.2011
(73) Patentinhaber: Lorenz Hasenbach GmbH & Co. KG, 65520 Bad Camberg (DE)
(72) Erfinder: Alm, Klaus, 65520, Bad Camberg (DE)
(74) Vertreter: Müller, Eckhard

(56) Entgegenhaltungen:
- FR-A1- 2 505 004
- US-A- 5 287 645
- US-A1- 2005 246 874

## Beschreibung

Die vorliegende Erfindung betrifft einen Haken, insbesondere für Sicherheitseinrichtungen, wie Fallschutzläufer, mit einem Hakenkörper, der eine Hakenöffnung als Zugang zu dem Innenbereich zum Einhaken aufweist, und mit einem Verschlussteil, das einen Bolzen sowie eine in Achsrichtung des Bolzens verschiebbare Schiebehülse umfasst, wobei der Bolzen an seinem einen Ende mit dem einen die Hakenöffnung begrenzenden Ende des Hakenkörpers verbunden ist und die Hakenöffnung verschließbar ist, indem die Schiebehülse in Achsrichtung des Bolzens bewegbar ist, wobei in der Verschlussstellung das freie Ende der Schiebehülse in das andere die Hakenöffnung begrenzende Ende des Hakenkörpers eingreift, wobei ein Teil der Bewegungen der Schiebehülse von der Öffnungsstellung in die Verschlussstellung durch mindestens ein Federelement unterstützt ist, das mit der Verschiebebewegung der Schiebehülse zu deren Öffnungsstellung so gespannt wird, dass das mindestens eine Federelement in der Öffnungsstellung zumindest in Achsrichtung der Schiebehülse auf die Schiebehülse eine Kraft ausübt.

### Stand der Technik

Haken, wie sie vorstehend angegeben sind, auch als Karabinerhaken bezeichnet, werden in unterschiedlichen Einsatzgebieten zur Sicherung, insbesondere von Personen, eingesetzt. Ein besonderer Einsatzbereich ist derjenige in Absturzsicherungssystemen, wie beispielsweise Auffang-, Halte-, Rückhalte-, Rettungssystemen, und Systemen für seilunterstützte Arbeiten. In diesem Zusammenhang kann ein solcher Haken auch in Verbindung mit Fallschutzläufern eingesetzt werden. Ein Fallschutzläufer umfasst einen an einer Schiene geführten Laufwagen, der eine Öse besitzt, in die sich eine zu sichernde Person einhakt. Während eine Person beispielsweise entlang einer Steigleiter aufsteigt, wird dann der Fallschutzläufer über das Sicherungsseil mitgezogen. Im Fall eines Sturzes wird über das Sicherungsseil auf den Fallschutzläufer eine Kraft ausgeübt, die zu einem Festklemmen des Fallschutzläufers an der Schiene führt.

Wesentlich für die vorstehenden Anwendungsgebiete ist, dass der Haken, mit dem sich eine Person sichert, so verschlossen wird, dass ein unbeabsichtigtes Öffnen des Verschlussteils nicht gegeben ist. Andererseits muss aber auch gewährleistet sein, dass sich ein solcher Karabinerhaken leicht für den Einhakvorgang öffnen lässt und sich schnell und einfach schließen und verriegeln lässt.

Eine Art von Karabinerhaken, wie sie derzeit bekannt sind, besitzen Verriegelungselemente, die schwenkbar an dem Hakenkörper angeordnet sind. Eine andere Art von Karabinerhaken besitzt Verschlussteile, die zweiteilig aus einem Bolzen und einer Hülse aufgebaut sind. Um die Hakenöffnung freizugeben oder auch wieder zu verschließen, wird die Hülse entlang des Bolzens verschoben.

Um zu gewährleisten, dass die Haken, wenn sie einmal eingehakt sind, auch durch das Verschlussteil verschlossen werden, sind in den Haken Federelemente integriert, die das Verschlusselement, wenn es einmal geöffnet ist, in die Verschlussstellung zurückführen. Weiterhin werden Maßnahmen vorgesehen, um das Verschlusselement in der Verriegelungsstellung zusätzlich zu verriegeln, wozu beispielsweise das Verriegelungselement oder zumindest Teile davon gedreht werden.

Die Druckschrift DE 91 10 358 U1 beschreibt einen Karabinerhaken, bei dem das Verschlussteil, das aus einem Bolzen und einer Schiebehülse besteht, schwenkbar mit dem Bolzen an dem Hakenkörper angeordnet ist. Die Schiebehülse muss nur einen kurzen Weg entlang des Bolzens verschoben werden, um, in der Verriegelungsstellung das Ende der Schiebehülse aus dem zugeordneten Ende des Hakenkörpers zu lösen, damit dann das Verschlussteil geschwenkt werden kann. Für die Verriegelung der Schiebehülse ist an dem Bolzen ein Kulissenstift vorgesehen, der in einem L-förmigen Schlitz in der Schiebehülse geführt wird.

Aus US 5,287,645 ist ein Haken mit einem verschwenkbaren Verschlussteil bekannt. Zur Sicherung in einer Verschlussstellung ist eine entlang dem Verschlussteil verschiebbare Hülse vorgesehen, in die in der Verschlussstellung ein Federbolzen eingreift.

Aus FR 2 505 004 ist ein Haken mit einem verschwenkbaren Verschlussteil bekannt, wobei das verschwenkbare Verschlussteil ein Gewinde aufweist, mit dem eine in das Gewinde eingreifende Hülse in eine die Verschlussstellung sichernde Position verbracht werden kann.

Aus US 2005/0246874 A1 ist ein Haken mit einem verschwenkbaren Verschlussteil bekannt, bei dem das Verschlussteil eine gegen die Kraft einer Rückstellfeder rotierbare Sicherungshülse aufweist, wie im Oberbegriff von Anspruch 1 angegeben.

Vergleichbare Karabinerhaken sind in der US 2003/0167608 A1, der CH 604 755 und der DE 296 10 293 U1 beschrieben, die Karabinerhaken mit schwenkbarem Verschlussteil und Führungselementen der Schiebehülse an dem Bolzen zeigen, bei denen ein vorstehendes Führungsteil an dem Bolzen angeordnet ist, während die zugeordnete Führungsnut in die Schiebehülse integriert ist.

Schließlich ist aus der DE 81 37 776 U1 ein Karabinerhaken, insbesondere für einen Schlüsselanhänger bekannt, mit zwei Längsseiten, von denen eine in einen hakenförmigen Teil übergeht, während der dem hakenförmigen Teil gegenüberliegende Teil von einer durchgesteckten Lasche umgriffen ist. Zum Öffnen und Verschließen des Karabinerhakens dient eine Schraubhülse.

### Aufgabe

Der vorliegenden Erfindung liegt nun die Aufgabe zugrunde, einen Haken, insbesondere einen Haken für Sicherungseinrichtungen, wie Fallschutzläufer, zu schaffen, der einen einfachen Aufbau aufweist und insbesondere eine stabile Führung zwischen Bolzen und Schiebehülse gewährleistet. Auch soll eine Verriegelung des Verschlussteils in der Verriegelungsstellung ermöglicht werden. Der Haken soll weiterhin die Möglichkeit einer Ausführungsform bieten, die eine Platz sparende Öffnung des Hakens zulässt sowie einen kompakten Aufbau besitzt.

### Erfindung und vorteilhafte Wirkungen

Gelöst wird diese Aufgabe durch einen Haken mit den eingangs genannten Merkmalen, der dadurch gekennzeichnet ist, dass die Schiebehülse ein Nockenelement aufweist und der Bolzen mindestens zwei in Achsrichtung verlaufende Nockenflächen umfasst, die in Umfangsrichtung des Bolzens versetzt sind und auf denen das Nockenelement entlang gleitet, wobei die eine Nockenfläche dem Nockenelement während der Überführung der Schiebehülse von der Verriegelungsstellung in die Verschlussstellung der Schiebehülse zugeordnet ist und nach einer Drehung der Verschiebehülse um die Achse des Bolzens die andere Nockenfläche dem Nockenelement während der Überführung des Schiebeelements von der Verschlussstellung in die Öffnungsstellung zugeordnet ist.

Ein wesentliches Merkmal des erfindungsgemäßen Hakens ist darin zu sehen, dass die Nockenflächen an dem Bolzen angeordnet sind, während das Nockenelement auf der Innenseite der Schiebehülse vorhanden ist. Dadurch kann die Schiebehülse eine glatte Oberfläche aufweisen, das heißt es sind keine Durchbrechungen vorhanden, die bei der Betätigung der Schiebehülse die Handhabung stören könnten. Außerdem unterliegen solche Durchbrechungen möglichen Beschädigungen bei der Benutzung. Eine solche Möglichkeit ist bei dem erfindungsgemäßen Karabinerhaken nicht gegeben. Ein weiterer Vorteil liegt darin, dass die erforderlichen Nockenflächen sehr einfach in der Oberfläche des Bolzens gebildet werden können.

Bevorzugt werden die Nockenflächen durch abgeflachte Flächen am Außenumfang des Bolzens gebildet. Diese Nockenflächen können in einfacher Weise in die Oberfläche des Bolzens eingebracht werden. Das bedeutet auch, dass der Bolzen aus einem stabförmigem Material, beispielsweise einem Rundstahl, gefertigt werden kann.

Das Nockenelement, das erfindungsgemäß der Schiebehülse zugeordnet ist, kann so ausgebildet werden, dass es über einen Teil des Innenquerschnitts der Schiebehülse vorsteht. Um eine solche Schiebehülse mit Nockenelement aus einfachen und damit kostengünstigen Bauteilen aufzubauen, sollte das Nockenelement durch einen Stift gebildet werden. Ein solcher Stift wird, um das Nockenelement zu bilden, in die Schiebehülse so eingesetzt, dass er deren Mantelfläche in einer Ebene senkrecht zu der Achse des Bolzens derart durchdringt, dass der freie Öffnungsquerschnitt der Schiebehülse abgeflacht ist. Somit wird, um die Schiebehülse herzustellen, nur ein passend in der Länge dimensionierter Hülsenabschnitt eines Stangenmaterials bereitgestellt und dieser Hülsenabschnitt wird an der passenden Stelle quer durchbohrt, um dann durch die beiden sich gegenüberliegenden Bohrungen in der Hülsenwand den Stift hindurchzustecken und an seinen Enden mit der Hülsenwandung fest zu verbinden. Der Teil des Stifts, der sich durch den Innenquerschnitt der Hülse erstreckt, bildet dann das Nockenelement dieser Schiebehülse, das der Nockenfläche des Bolzens zugeordnet ist.

Die Nockenfläche, die der Schiebehülse beim Überführen von der Verriegelungsstellung in die Verschlussstellung zugeordnet ist, sollte in Achsrichtung des Bolzens gesehen eine Länge aufweisen, die größer als die Dicke des Nockenelements in dieser Achsrichtung ist. Vorzugsweise sollte die Länge dieser Nockenfläche mindestens das Doppelte der Dicke des Nockenelements in Achsrichtung betragen. Gegen diese Nockenfläche legt sich das Nockenelement in der Verschlussstellung und der Verriegelungsstellung des Hakens an. Um das Verschlussteil zu öffnen, ist es dann erforderlich, die Schiebehülse zunächst in Achsrichtung des Bolzens zu verschieben, um das Nockenelement aus einer Verriegelungsstellung zu lösen, bevor das Nockenelement dann in eine Stellung gebracht werden kann, in der ein weiteres Verschieben der Schiebehülse in die Öffnungsstellung möglich ist. Erst durch diese weitere Verschiebung der Schiebehülse in die Öffnungsstellung wird das freie Ende der Schiebehülse von dem zugeordneten die Hakenöffnung begrenzenden Ende des Hakenkörpers freigegeben.

Die Länge der anderen Nockenfläche, die dem Nockenelement während der weiteren Verschiebebewegung der Schiebehülse in die Öffnungsstellung zugeordnet ist, sollte, in Richtung des Bolzens gesehen, mindestens der Öffnungsweite der Hakenöffnung in der Öffnungsstellung der Schiebehülse entsprechen.

Bei einer vorteilhaften Ausführung des erfindungsgemäßen Hakens ist vorgesehen, dass die Nockenfläche, die der Schiebehülse in der Öffnungsstellung zugeordnet ist, nämlich die Nockenfläche, entlang der das Nockenelement während der weiteren Verschiebebewegung der Schiebehülse in die Öffnungsstellung gleitet, gewunden ausgebildet ist. Eine solche Ausführung hat den Vorteil, dass die in der Öffnungsstellung vom Benutzer losgelassene Schiebehülse außer in eine lineare Verschiebebewegung zusätzlich in eine erste Rotationsbewegung versetzt wird, wodurch der Übergang des Nockenelements von der Nockenfläche, die der Schiebehülse in der Öffnungsstellung zugeordnet ist, zu der anderen Nockenfläche, die der Schiebehülse in der Verriegelungsstellung zugeordnet ist, erleichtert ist. Insbesondere ist ein hartes und lautes Anschlagen des Nockenelements beim Übergang einer Nockenfläche auf die andere Nockenfläche zumindest etwas verringert. Hierdurch wird eine Materialschonung erreicht.

Weiterhin sollten sich die beiden Nockenflächen in Achsrichtung des Bolzens gesehen so überlappen, dass das Nockenelement von der einen Nockenfläche auf die andere Nockenfläche überführbar ist, vorzugsweise durch ein entsprechendes Drehen der Schiebehülse um die Achse des Bolzens.

Die Ebenen der beiden Nockenflächen sollten in Umfangsrichtung des Bolzens gesehen, zumindest in dem Bereich, in dem das Nockenelement in der Öffnungsstellung und der Verschlussstellung anliegt, einen Winkel von etwa 90° einschließen. Dies bedeutet wiederum, dass die Hülse mit dem Nockenelement dann, wenn von der Verschlussstellung in die Öffnungsstellung übergegangen werden soll, zunächst um 90° zu drehen ist. Erst dann kann die Schiebehülse in Achsrichtung des Bolzens verschoben werden, so dass sie sich von dem zugeordneten Ende des Hakenkörpers löst.

Das mindestens eine Federelement, das bewirkt, dass die Schiebehülse dann, wenn sie einmal in die Öffnungsstellung verschoben wird, wieder in die Verschlussstellung gedrückt wird, nachdem sie mit der Hand freigegeben ist, sollte eine Druckfeder sein, die sich an dem Bolzen abstützt.

Weiterhin sollte mindestens ein Federelement dann gespannt werden, wenn die Schiebehülse von der Verschlussstellung ausgehend um die Achse des Bolzens gedreht wird. Dadurch wird erreicht, dass, wenn das Verschlussteil in der Öffnungsstellung wieder freigegeben wird, ein selbsttätiges Verriegeln erfolgt, indem das gespannte Federelement die Schiebehülse um die Achse des Bolzens wieder in die Verschlussstellung dreht.

Bei einer vorteilhaften Ausführung des erfindungsgemäßen Hakens ist ein Schenkel des - beispielsweise als Schraubenfeder ausgeführten - Federelementes, in einer Nut oder in einem Schlitz der Schiebehülse verschiebbar angeordnet. Diese Ausführung hat den Vorteil, dass das Federelement zusammen mit der Schiebehülse verschoben werden kann, ohne dass dies einen negativen Einfluss auf das Drehmoment, das das Federelement ausübt, hat. Insbesondere kann vorgesehen sein, dass der in der Nut oder dem Schlitz geführte Schenkel mit einer Rolle und/oder einem Rad versehen ist, um eine Reibung in der Nut bzw. dem Schlitz zu verringern. Eine solche Ausführung ist besonders leichtgängig. Insbesondere um ein Eindringen von Schmutz in den Schlitz zu vermeiden kann die Schiebehülse - zumindest teilweise - mit einem Schlauch, insbesondere einem Schrumpfschlauch, überzogen sein, der den Schlitz abdeckt.

In einer konstruktiv einfachen, aber wirkungsvollen, Ausführung wird das mindestens eine Federelement durch eine Schraubenfeder gebildet, von der das eine Ende an dem Bolzen verankert ist und von der das andere Ende an der Schiebehülse verankert ist.

Bevorzugt ist auch eine Ausführung mit einer Schraubenfeder, die um den Bolzen herum angeordnet ist, die der Drehung der Schiebehülse um den Bolzen dient.

Auch kann in einer bevorzugten Ausführungsform ein Federelement vorgesehen werden, das sich sowohl in radialer Richtung spannt, wenn die Schiebehülse von der Verschlussstellung ausgehend um die Achse des Bolzens gedreht wird, als auch in axialer Richtung gespannt wird, wenn die Schiebehülse in Achsrichtung des Bolzens von der Verschlussstellung in die Öffnungsstellung verschoben wird. In einer solchen Ausgestaltung wird nur ein Federelement benötigt, um sowohl die axiale Verschiebung der Schiebehülse von der Öffnungsstellung in die Verschlussstellung als auch die Drehung der Hülse gegenüber dem Bolzen um dessen Achse von der Verschlussstellung in die Verriegelungsstellung zu erreichen.

Zusätzlich kann an dem freien Ende der Schiebehülse eine Verriegelung vorgesehen werden, die sich dann mit dem zugeordneten die Hakenöffnung begrenzenden Ende des Hakenkörpers verriegelt, wenn die Schiebehülse um die Achse des Bolzens gedreht wird. Bevorzugt wird diese zusätzliche Verriegelung konstruktiv entsprechend der Verriegelung zwischen Bolzen und Schiebehülse ausgeführt. Dadurch werden mit denselben Bewegungsabläufen zwischen Bolzen und Schiebehülse dieselben Verriegelungsvorgänge auch zwischen dem Ende der Schiebehülse und dem freien Ende des die Hakenöffnung begrenzenden Hakenkörpers ermöglicht.

Aus diesem Grund sollte die Verriegelung beispielsweise durch einen Verriegelungsstift gebildet werden, der in die Schiebehülse so eingesetzt ist, dass er deren Mantelfläche in einer Ebene senkrecht zu der Achse des Bolzens derart durchdringt, dass der freie Öffnungsquerschnitt der Schiebehülse abgeflacht ist. Ein entsprechender Aufbau wird dann vorzugsweise auch für die Verriegelung zwischen Schiebehülse und Bolzen eingesetzt, wie dies vorstehend bereits beschrieben ist.

### Ausführungsbeispiele

Weitere Ziele, Merkmale sowie vorteilhafte Anwendungsmöglichkeiten der vorliegenden Erfindung werden anhand der nachfolgenden Beschreibung von Ausführungsbeispielen anhand der Zeichnungen erläutert.

### In der Zeichnung zeigt

- Figur 1: eine perspektivische Ansicht eines in der Verriegelungsstellung befindlichen erfindungsgemäßen Hakens,
- Figur 2: eine Ansicht des Hakens der Figur 1 aus Richtung des Sichtpfeils II in Figur 1
- Figur 3: eine Ansicht des Hakens der Figur 1 aus Richtung des Sichtpfeils III in Figur 1,
- Figur 4: eine der Figur 3 entsprechende Ansicht des Hakens in einer vergrößerten Darstellung, bei der einzelne Bauteile transparent dargestellt sind,
- Figur 5A: einen Schnitt entlang der Schnittlinie A-A der Figur 4,
- Figur 5B: eine vergrößerte Detaildarstellung des Ausschnitts 5B in Figur 5A,
- Figur 6A: die Schnittdarstellung der Figur 5A mit gegenüber Figur 5A in der Verschlussstellung befindlichen Verschlussteil,
- Figur 6B: eine vergrößerte Detaildarstellung des Ausschnitts 6B in Figur 6A,
- Figur 7A: die Schnittdarstellung der Figur 5A bzw. 6A mit gegenüber den Figuren 5A und 6A in der Öffnungsstellung befindlichen Verschlussteil
- Figur 7B: eine vergrößerte Detaildarstellung des Ausschnitts 7B in Figur 7A und
- Figur 8: eine weitere Detaildarstellung des Hakens.

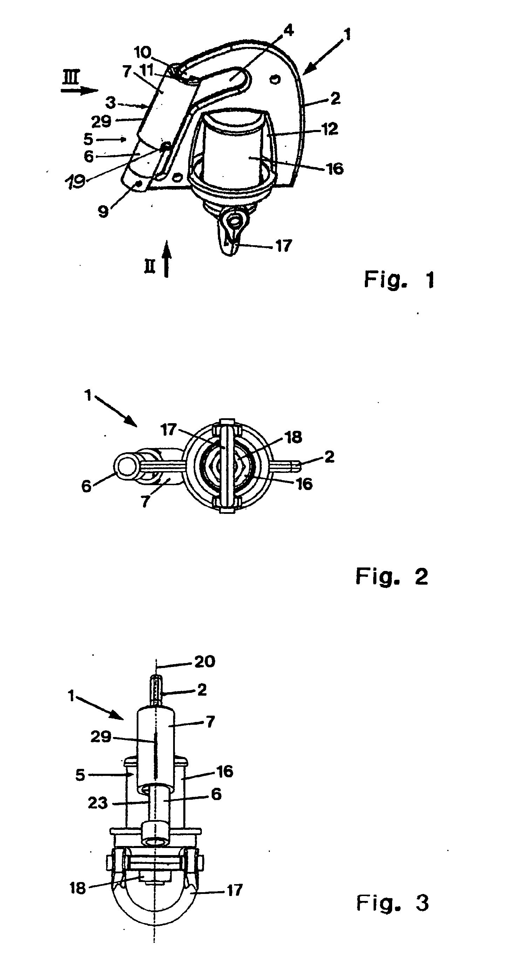

Der Haken 1, wie er in Figur 1 dargestellt ist, umfasst einen Hakenkörper 2, der auf seiner einen Seite eine Hakenöffnung 3 aufweist, die einen Zugang zu dem Innenbereich 4 ermöglicht, um beispielsweise ein Seil, eine Schlaufe, eine Öse oder dergleichen einzuhaken. Die Hakenöffnung 3 ist in dieser Darstellung des Hakens 1 durch ein Verschlussteil, das allgemein mit dem Bezugszeichen 5 bezeichnet ist, verschlossen.

Das Verschlussteil 5 besteht im Wesentlichen aus einem Bolzen 6 sowie einer in Achsrichtung des Bolzens 6 verschiebbaren Schiebehülse 7. Der Bolzen 6 ist in der dargestellten Verschlussstellung des Hakens 1 an dem einen in Figur 1 unteren Ende 8 des Hakenkörpers 2 durch einen Befestigungsstift 9 feststehend befestigt. In das andere, obere Ende 10 des Hakenkörpers 2, das die Hakenöffnung 3 begrenzt, greift das freie Ende 11 der Schiebehülse 7 ein. Durch den feststehenden Bolzen 6 ergibt sich eine Platz sparende Öffnung des Hakens sowie ein kompakter Aufbau.

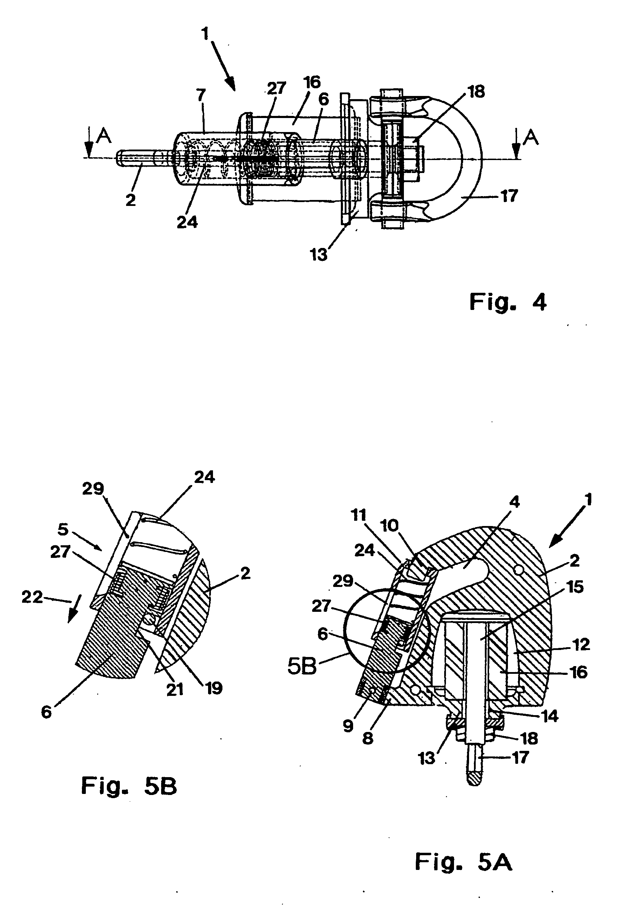

Der Hakenkörper 2, der in der gezeigten Ausführungsform aus einem flachen, plattenförmigen Material gebildet ist, weist einen von dem Innenbereich 4 abgetrennten Raum 12 auf, der durch ein Flanschteil 13 verschlossen ist. Das Flanschteil 13 ist fest mit dem Hakenkörper 2 verbunden. Das Flanschteil 13 besitzt eine Bohrung 14, die in den Schnittdarstellungen der Figuren 5A, 6A und 7A zu sehen ist, durch die eine Halteschraube 15 hindurchgeführt ist. Mit der Halteschraube 15 wird ein zylindrisches Dämpfungselement 16 gehalten, das in dem Raum 12 aufgenommen ist und sich auf dem Flanschteil 13 abstützt. An dem durch das Flanschteil 13 hindurchgeführten Ende der Halteschraube 15 ist eine Anbindungsöse 17 mit einer Mutter 18 verschraubt.

Das Dämpfungselement 16 dient dazu, ruckartig zwischen der Anbindungsöse 17 und einem in die Hakenöffnung 3 eingehakten Teil zu dämpfen, indem sich das Dämpfungselement 16, das beispielsweise aus einem Kunststoffmaterial gebildet ist, zusammendrückt und die auftretenden Kräfte abfedert bzw. durch Deformation absorbiert.

Ein wesentlicher Aspekt eines solchen Hakens 1, auch als Sicherheitshaken oder Karabinerhaken bezeichnet, ist derjenige, dass zum einen der Zugang zu dem Innenbereich 4 des Hakenkörpers 2 durch den Verschlussteil 5 so verschlossen wird, dass kein unbeabsichtigtes Öffnen des Verschlussteils 5 auftreten kann. Andererseits ist es aber auch erforderlich, dass das Verschlussteil 5 trotzdem leicht, nach Möglichkeit unter zur Hilfenahme nur einer Hand, zu öffnen ist. Auch muss gewährleistet sein, dass nach Öffnen des Verschlussteils 5 insbesondere dann, wenn ein Gegenstand eingehakt ist, ein korrektes Verschließen und zusätzliches Verriegeln des Verschlussteils 5 erfolgt.

Die vorstehenden Forderungen werden durch die besondere Ausgestaltung des aus dem Bolzen 6 und der Schiebehülse 7 bestehenden Verschlussteils 5 erreicht.

Die Schiebehülse 7 besitzt ein Nockenelement in Form eines Stiftes 19, der in dem gezeigten Ausführungsbeispiel einen kreisrunden Querschnitt hat. Dieser Stift 19 ist in die Schiebehülse 7 eingesetzt, indem er durch zwei gegenüberliegende Bereiche der Wand der Schiebehülse 7 geführt ist und fest mit der Schiebehülse 7 verbunden ist. Der Stift 19 verläuft in einer Ebene senkrecht zu der Achse 20 des Bolzens 6 und ist zu der Achse 20 seitlich versetzt, so dass von dem Querschnitt der Schiebehülse 7 ein kleiner Randabschnitt abgetrennt ist.

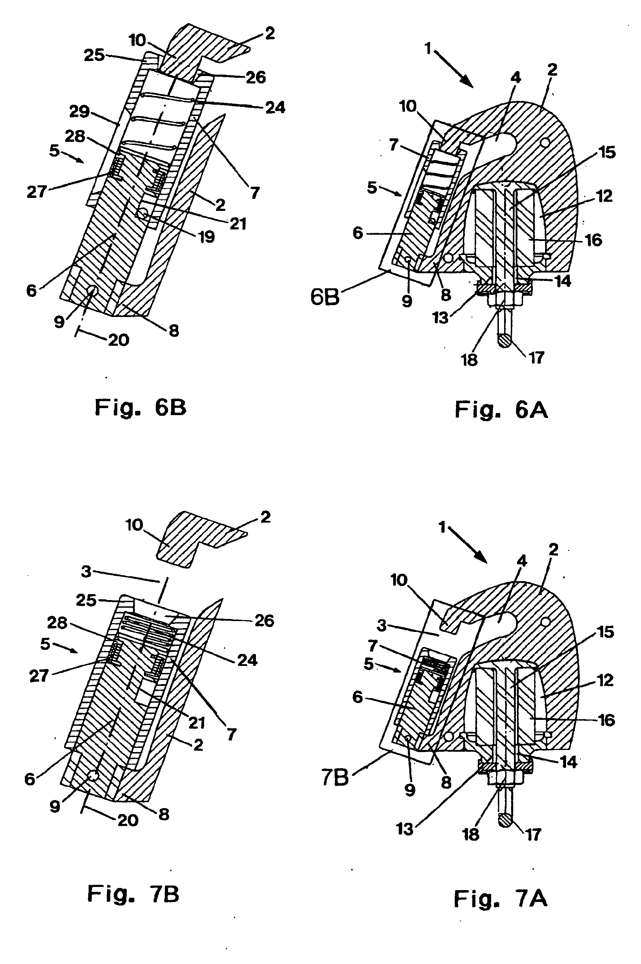

Der Stift 19, der ein Nockenelement bildet, ist zwei Nockenflächen zugeordnet, die in Längsrichtung des Bolzens 6, das bedeutet in Richtung dessen Achse 20, ausgebildet sind. Die eine Nockenfläche, in den Figuren mit dem Bezugszeichen 21 bezeichnet, ist dem Stift 19 dann zugeordnet, wenn die Schiebehülse 7 von der Verriegelungsstellung in die Verschlussstellung überführt wird, wie dies in den Figuren 6A und 6B dargestellt ist. Die Länge der Nockenfläche 21 beträgt, in Richtung der Achse 20 des Bolzens 6 gesehen, das Doppelte oder etwas mehr als das Doppelte des Durchmessers des Stifts 19. Diese Nockenfläche 21 ist die Bodenfläche einer quer verlaufenden Nut. In dieser Verriegelungsstellung liegt der Stift 19 an der einen Seitenfläche der Nut an. Ausgehend von dieser Verriegelungsstellung kann dann, wenn das Verschlussteil 5 geöffnet werden soll, die Schiebehülse 7 in Richtung des Pfeils 22 (Figur 5B) in die Verschlussstellung geschoben werden, bis der Stift 19 an der anderen Seitenfläche der Nut zur Anlage gelangt.

Diese Stellung ist in den Figuren 6A und 6B gezeigt.

Ausgehend von dieser Verschlussstellung kann dann die Schiebehülse 7 in Gegenuhrzeigerrichtung um den Bolzen 6 gedreht werden, so dass sie dann an der anderen Nockenfläche 23 zur Anlage gelangt. Diese Nockenfläche 23 ist in Figur 3 zu sehen. Damit sich der Stift 19 von der Verschlussstellung der Figur 6B zusammen mit der Schiebehülse 7 um 90° drehen kann, sind die erste Nockenfläche 21 und die zweite Nockenfläche 23 so in Richtung der Achse 20 des Bolzens 6 positioniert, dass sie sich um zumindest den Durchmesser des Stifts 19 überlappen.

Wenn sich dann die Schiebehülse 7 in der gedrehten Stellung befindet, kann sie entlang der anderen Nockenfläche 23 weiter nach unten entlang des Bolzens 6 in die Öffnungsstellung geschoben werden, bis sie an ihrem unteren Ende an Teile des Hakenkörpers 2 anschlägt. In dieser Stellung ist die Hakenöffnung 3 geöffnet, so dass ein Gegenstand eingehakt werden kann.

Dadurch, dass die Nockenfläche 21 in Achsrichtung des Bolzens 6 gesehen etwa die doppelte Länge wie der Durchmesser des darin einliegenden Stifts 19 besitzt, ist eine Drehung der Schiebehülse 7 erst dann möglich, wenn die Schiebehülse 7 zunächst einen kurzen Weg in Achsrichtung des Bolzens 6 verschoben wurde. In der Ausgangsstellung ist die Schiebehülse 7 gegen ein Verdrehen gesichert, während in der anderen Stellung ein Verdrehen der Schiebehülse 7 möglich ist.

In den verschiedenen in der Zeichnung gezeigten Schnittdarstellungen ist zu erkennen, dass in das Verschlussteil 5 zwei Federelemente integriert sind. Ein Federelement 24, bei dem es sich um eine als Schraubenfeder ausgeführte Druckfeder handelt, ist zwischen dem stirnseitigen freien Ende des Bolzens 6 und dem freien Ende 25 der Schiebehülse 7 eingefügt. Damit das Federelement 24 eine Anlagefläche an diesem Ende 25 der Schiebehülse 7 hat, weist diese einen nach innen, das bedeutet zu der Achse 20 des Bolzens 6 hin, gerichteten Rand auf.

Das freie Ende 25 der Schiebehülse 7 besitzt eine zu der Achse 20 des Bolzens 6 zentrisch angeordnete Öffnung 26 mit einer konischen Einlauföffnung, in die sich das obere die Hakenöffnung 3 begrenzende Ende 10 des Hakenkörpers 2 einfügt, wenn sich die Schiebehülse 7 in ihrer Verschlussstellung (Figur 6A) und Verriegelungsstellung (Figur 1) befindet.

Das Federelement 24 wird, ausgehend von seinem in der Verschlussstellung und Verriegelungsstellung entspannten Zustand, dann zusammengedrückt und gespannt, wenn die Schiebehülse 7 in die Öffnungsstellung geschoben wird, wie dies die Figur 7B zeigt. Dies hat zur Folge, dass die Schiebehülse 7 durch diese gespannte Druckfeder 24, ausgehend von der in Figur 7B gezeigten Öffnungsstellung, wieder in die Verschlussstellung gedrückt wird, wenn die Schiebehülse 7 mit der Hand losgelassen wird.

Das zweite Federelement 27, auch eine Schraubenfeder, die auch als Schenkelfeder bezeichnet werden kann, ist in eine um die Außenfläche des Bolzens 6 umlaufende Nut 28 so eingelegt, dass sie nicht über die Außenfläche des Bolzens 6 vorsteht. Dieses Federelement 27 besitzt an seinen Enden zwei abgewinkelte Schenkel. Der eine abgewinkelte Schenkel ist in den Bolzen 6 eingehakt, während der andere abgewinkelte Schenkel am anderen Ende des Federelements 27 radial nach außen gerichtet ist und in einen Längsschlitz 29 der Schiebehülse 7 aufgenommen ist. Dieser Längsschlitz 29, der in Figur 3, aber auch in den Figuren 5A, 5B und 6A, 6B, zu sehen ist, erstreckt sich in Richtung der Achse 20 des Bolzens 6. Der Längsschlitz 29 besitzt eine Länge, die etwa der Länge des möglichen Verschiebewegs der Schiebehülse 7 entlang des Bolzens 6 entspricht. Dadurch kann sich der nach außen abgewinkelte Schenkel des Federelements 27, der in diesem Längsschlitz 29 aufgenommen ist, entlang des Längsschlitzes 29 verschieben, wenn die Schiebehülse 7 in ihre Öffnungsstellung verschoben wird.

Dieses zweite Federelement 27 wird, ausgehend von der Verschlussstellung des Verschlussteils 7, wie sie in den Figuren 6A und 6B gezeigt ist, dann gespannt, wenn die Schiebehülse 7 gedreht wird, um den Stift 19 von der Nockenfläche 21 zu der Nockenfläche 23 zu überführen. Diese Spannung des zweiten Federelements 27 dient dazu, die Schiebehülse 7 selbsttätig, ausgehend von der Öffnungsstellung des Verschlussteils 5 in den Figuren 7A und 7B, wieder in die Verschlussstellung zu drehen. Wenn nämlich die Schiebehülse 7 in der Öffnungsstellung freigegeben wird, wird sie durch das Federelement 24 axial verschoben. Gleichzeitig versucht das zweite Federelement 24 die Schiebehülse 7 um ihre Achse zu drehen. Wenn die Schiebehülse 7 durch das Federelement 24 so weit in Richtung der Verschlussstellung verschoben ist, dass sich der Stift 19 in dem Bereich befindet, in dem sich die beiden Nockenflächen 21 und 23 in axialer Richtung des Bolzens 6 überlappen, wird der Bolzen 6 durch die Rückstellkraft des zweiten Federelements 27 von der Nockenfläche 23 auf die Nockenfläche 21 überführt. In dieser Stellung (Figuren 6A und 6B) wird dann die Schiebehülse 7 weiter in axialer Richtung durch das Federelement 24 in die Verriegelungsstellung gedrückt, die in den Figuren 5A und 5B gezeigt ist.

Es ist darauf hinzuweisen, dass eine zusätzliche Verriegelung zwischen dem freien Ende 25 der Schiebehülse 7 und dem oberen Ende 10 des Hakenkörpers 2 erfolgen kann. Hierzu wird in das freie Ende 25 der Schiebehülse 7 ein nicht dargestellter Verriegelungsstift eingesetzt, der in seiner Anordnung dem Stift 19 entspricht. Um diesen als Nocken dienenden Verriegelungsstift an dem Ende 10 des Hakenkörpers 2 zu führen, werden dann an dem Ende 10 zwei Nockenflächen vorgesehen, die mit den beiden Nockenflächen 21 und 23 des Bolzens 6 vergleichbar sind. Der zusätzliche Verriegelungsstift muss in seiner Orientierung nicht exakt dem Stift 19 entsprechen. Es ist aber darauf zu achten, dass die beiden Nockenflächen an dem Ende 10 des Hakenkörpers 2 in geeignetem Umfang zueinander in Umfangsrichtung versetzt sind, so dass mit der Drehung der Schiebehülse 7 um ihre Achse die Stifte jeweils von der einen Nockenfläche in die sich in axialer Richtung überlappende andere Nockenfläche überführt werden.

Anhand der vorstehenden Beschreibung des Ausführungsbeispiels wird deutlich, dass gerade dadurch, dass die Schiebehülse 7 den als Nocken wirkenden Stift 19 aufweist, während der Bolzen 6 Nockenflächen 21 und 23 besitzt, die durch Abflachungen gebildet sind, eine einfache Herstellung des Verschlussteils 5 möglich ist. Besonders vorteilhaft ist die Ausführung des Nockens durch den in die Schiebehülse 7 in zwei gegenüberliegenden Bohrungen eingesetzten Stift 19.

Es sollte auch darauf hingewiesen werden, dass die beiden Nockenflächen 21 und 23 derart ausgeführt werden können, dass sie entsprechend einem Kurvenverlauf von der einen Ausrichtung an dem einen Ende zu einer um beispielsweise 90° gedrehten Ausrichtung an dem anderen Ende verlaufen können. Dadurch ergibt sich beim Öffnen der Schiebehülse 7 eine überlagerte Bewegung. Mit einem Verschieben der Schiebehülse 7 wird gleichzeitig die Schiebehülse 7 gedreht.

In der gezeigten Ausführungsform sind sowohl eine Druckfeder 24 als auch eine Schenkelfeder 27 vorgesehen. Die Funktionen beider Federn 24 und 27 könnten durch eine einzige Feder übernommen werden, beispielweise durch ein Federelement, bei dem die beiden Enden der Federn 24 und 27 miteinander verbunden sind. Dann wäre das eine Ende der Druckfeder mit dem Bolzen 6 verbunden, während das andere Ende dann mit der Schiebehülse 7 verbunden wäre. Ein Vorteil könnte darin gesehen werden, dass der Längsschlitz 29, um das eine Ende der Schenkelfeder 27 in der Schiebehülse 7 zu führen, wenn die Schiebehülse 7 linear verschoben wird, bei einer solchen Ausführungsform mit nur einer Feder entfallen würde.

Während sich in der gezeigten Ausführungsform die Druckfeder 24 am stirnseitigen Ende des Bolzens 6 abstützt, ist auch eine Ausführungsform vorgesehen, bei der sich die Druckfeder 24 in eine Sacklochbohrung des Bolzens 6 einlegt. Dadurch könnte ein größerer Federweg der Druckfeder 24 erhalten werden.

Ein wesentliches Merkmal des gezeigten Karabinerhakens ist die dreifache Bewegung der Schiebehülse 7, um von der Verriegelungsstellung über die Verschlussstellung zur Öffnungsstellung zu gelangen. Zunächst erfolgt eine Linearbewegung der Schiebehülse 7 in die Verschlussstellung, dann eine Drehbewegung, gefolgt von einer weiteren Linearbewegung in die Öffnungsstellung. An dem Bolzen 6 könnten in Richtung dessen Achse weitere zueinander versetzte Nockenflächen vorgesehen werden, die, um die Schiebehülse 7 zu öffnen oder zu schließen, ein mehrfaches, abwechselndes axiales Verschieben der Schiebehülse 7 entlang der Achse des Bolzens 6 sowie radiales Drehen der Schiebehülse 7 um die Achse des Bolzens 6 erfordert. Diese Nockenflächen können entsprechend den vorstehend beschriebenen Nockenflächen aufgebaut sein, wobei sich die jeweiligen benachbarten Nockenflächen so in Achsrichtung des Bolzens 6 überschneiden müssen, dass der Nocken von der einen Nockenfläche auf die andere Nockenfläche überführt werden kann. Durch eine größere Anzahl an Nockenflächen können die willensabhängigen Sicherungsvorgänge bei dem Verschieben der Schiebehülse erhöht werden.

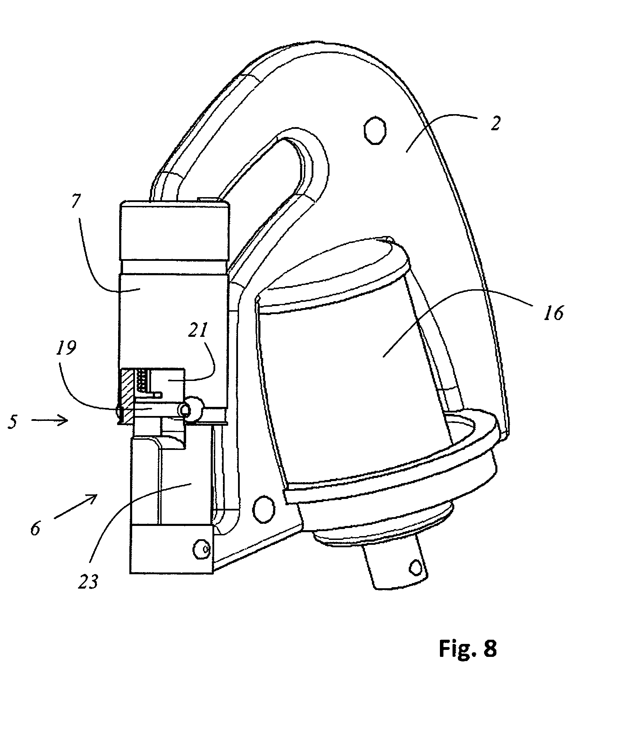

Figur 8 zeigt eine weitere Detaildarstellung des Hakens 1. In dieser Figur sind die erste Nockenflächen 21, und die zweite Nockenflächen 23 gut erkennbar. Die erste Nockenfläche 21 ist dem Nockenelement 19 in der dargestellten Verschlussstellung der Schiebehülse 7 zugeordnet, während die andere Nockenfläche 23 dem Nockenelement 19 während der (in dieser Figur nicht dargestellten) Verschiebebewegung der Schiebehülse 7 zu deren Öffnungsstellung zugeordnet ist. Die Schiebehülse ist in dieser Figur zum besseren Einblick teilweise aufgeschnitten dargestellt. Es ist gut zu erkennen, dass das Nockenelement 19 durch einen Stift 19 gebildet ist, wobei der Stift 19 in die Schiebehülse 7 so eingesetzt ist, dass er deren Mantelfläche in einer Ebene senkrecht zu der Achse des Bolzens 6 derart durchdringt, dass der freie Öffnungsquerschnitt der Schiebehülse 7 abgeflacht ist.

### Bezugszeichenliste

- 1: Haken
- 2: Hakenkörper
- 3: Hakenöffnung
- 4: Innenbereich
- 5: Verschlussteil
- 6: Bolzen
- 7: Schiebehülse
- 8: unteres Ende von 2
- 9: Befestigungsstift
- 10: oberes Ende von 2
- 11: freies Ende
- 12: Raum
- 13: Flanschteil
- 14: Bohrung
- 15: Halteschraube
- 16: Dämpfungselement
- 17: Anbindungsöse
- 18: Mutter
- 19: Stift
- 20: Achse von 6
- 21: erste Nockenfläche
- 22: Pfeil
- 23: zweite Nockenfläche
- 24: erstes Federelement
- 25: freies Ende
- 26: Öffnung
- 27: zweites Federelement
- 28: Nut
- 29: Längsschlitz

## Patentansprüche

1. Haken (1), insbesondere für Sicherheitseinrichtungen, wie Fallschutzläufer,
mit einem Hakenkörper (2), der eine Hakenöffnung (3) als Zugang zu dem Innenbereich zum Einhaken aufweist, und
mit einem Verschlussteil (5), das einen Bolzen (6) sowie eine in Achsrichtung des Bolzens (6) verschiebbare Schiebehülse (7) umfasst,
wobei der Bolzen (6) an seinem einen Ende mit dem einen die Hakenöffnung (3) begrenzenden Ende (8) des Hakenkörpers (2) verbunden ist und
die Hakenöffnung (3) verschließbar ist, indem die Schiebehülse (7) in Achsrichtung des Bolzens (6) bewegbar ist,
wobei in der Verschlussstellung das freie Ende (25) der Schiebehülse (7) in das andere die Hakenöffnung (3) begrenzende Ende des Hakenkörpers (3) eingreift und/oder wobei in der Verschlussstellung das freie Ende (25) der Schiebehülse (7) das andere die Hakenöffnung (3) begrenzende Ende des Hakenkörpers (3) umgreift,
wobei zumindest ein Teil der Bewegungen der Schiebehülse (7) von der Öffnungsstellung in die Verschlussstellung durch mindestens ein Federelement (24, 27) unterstützt ist, das mit der Verschiebebewegung der Schiebehülse (7) zu deren Öffnungsstellung so gespannt wird, dass das mindestens eine Federelement (24) in der Öffnungsstellung zumindest in Achsrichtung der Schiebehülse (7) auf die Schiebehülse (7) eine Kraft ausübt,
**dadurch gekennzeichnet,**
**dass** die Schiebehülse (7) ein Nockenelement (19) aufweist und der Bolzen (6) mindestens zwei in Achsrichtung verlaufende Nockenflächen (21, 23) umfasst, die in Umfangsrichtung des Bolzens (6) versetzt sind und auf denen das Nockenelement (19) entlang gleitet,
wobei die eine Nockenfläche (21) dem Nockenelement (19) während der Überführung der Schiebehülse (7) von der Verriegelungsstellung in die Verschlussstellung der Schiebehülse (7) zugeordnet ist und nach einer Drehung der Verschiebehülse (7) um die Achse (20) des Bolzens (6) die andere Nockenfläche (23) dem Nockenelement (19) während der Überführung des Schiebeelementes (7) von der Verschlussstellung in die Öffnungsstellung zugeordnet ist.

2. Haken nach Anspruch 1, **dadurch gekennzeichnet, dass** die Nockenflächen (21, 23) durch abgeflachte Flächen am Außenumfang des Bolzens (6) gebildet sind.

3. Haken nach Anspruch 1 oder 2, **dadurch gekennzeichnet, dass** das Nockenelement (19) über einen Teil des Innenquerschnitts der Schiebehülse (7) vorsteht.

4. Haken nach Anspruch 3, **dadurch gekennzeichnet, dass** das Nockenelement durch einen Stift (19) gebildet ist

5. Haken nach einem der Ansprüche 1 bis 4, **dadurch gekennzeichnet, dass** die Nockenfläche (21), die der Schiebehülse (7) beim Überführen von der Verrieglungsstellung in der Verschlussstellung zugeordnet ist, in Achsrichtung des Bolzens (6) gesehen eine Länge aufweist, die größer als die Dicke des Nockenelements (19) in dieser Achsrichtung ist und/oder dass die Länge der Nockenfläche (21) mindestens das Doppelte der Dicke des Nockenelements (19) in Achsrichtung beträgt.

6. Haken nach einem der Ansprüche 1 bis 4, **dadurch gekennzeichnet, dass** die andere Nockenfläche (23), die der Schiebehülse (7) in der Öffnungsstellung zugeordnet ist, gewunden ausgebildet ist.

7. Haken nach einem der Ansprüche 1 bis 6, **dadurch gekennzeichnet, dass** die Länge der anderen Nockenfläche (23) in Richtung des Bolzens (6) gesehen mindestens der Öffnungsweite der Hakenöffnung (3) in der Öffnungsstellung der Schiebehülse (7) entspricht.

8. Haken nach einem der Ansprüche 1 bis 7, **dadurch gekennzeichnet, dass** die Ebenen der beiden Nockenflächen (21, 23) in Umfangsrichtung des Bolzens (6) gesehen, zumindest in dem Bereich, in dem das Nockenelement (19) in der Öffnungsstellung und der Verriegelungsstellung anliegt, einen Winkel von etwa 90° einschließen.

9. Haken nach einem der Ansprüche 1 bis 8, **dadurch gekennzeichnet, dass** das mindestens eine Federelement (24) eine Druckfeder ist, die sich an dem Bolzen (6) abstützt und die Schiebehülse (7) in die Verschlussstellung drückt.

10. Haken nach einem der Ansprüche 1 bis 9, **dadurch gekennzeichnet, dass** mindestens ein Federelement (27) dann gespannt wird, wenn die Schiebehülse (7) von der Verschlussstellung ausgehend um die Achse (20) des Bolzens (6) gedreht wird und/oder dass das mindestens eine Federelement (27) durch eine Schraubenfeder gebildet ist, von der das eine Ende an dem Bolzen (6) verankert ist und von der das andere Ende an der Schiebehülse (7) verankert ist und/oder dass das mindestens eine Federelement (27) durch eine Schraubenfeder (27) gebildet ist, die um den Bolzen (6) herum angeordnet ist.

11. Haken nach einem der Ansprüche 1 bis 10, **dadurch gekennzeichnet, dass** ein Federelement (24, 27) vorgesehen ist, das sich sowohl in radialer Richtung spannt, wenn die Schiebehülse (7) von der Verschlussstellung ausgehend um die Achse (20) des Bolzens (6) gedreht wird, als auch in axialer Richtung gespannt wird, wenn die Schiebehülse (7) in Achsrichtung des Bolzens (6) von der Verschlussstellung in die Öffnungsstellung verschoben wird.

12. Haken nach einem der Ansprüche 1 bis 11, **dadurch gekennzeichnet, dass** in der Verschlussstellung das freie Ende (25) der Schiebehülse (7) mit dem das andere, die Hakenöffnung (3) begrenzenden Ende des Hakenkörpers (3) mechanisch verkoppelt ist.

13. Haken nach einem der Ansprüche 1 bis 12, **dadurch gekennzeichnet, dass** an dem freien Ende (25) der Schiebehülse (7) eine Verriegelung vorgesehen ist, die sich dann mit dem zugeordneten die Hakenöffnung (3) begrenzenden Ende (10) des Hakenkörpers (2) verriegelt, wenn die Schiebehülse (7) um die Achse (20) des Bolzens (6) gedreht wird.

14. Haken nach Anspruch 13, **dadurch gekennzeichnet, dass** die Verriegelung durch einen Verriegelungsstift gebildet ist, der in die Schiebehülse (7) so eingesetzt ist, dass er deren Mantelfläche in einer Ebene senkrecht zu der Achse (20) des Bolzens (6) derart durchdringt, dass der freie Öffnungsquerschnitt der Schiebehülse (7) abgeflacht ist.

15. Haken nach einem der Ansprüche 1 bis 14, **dadurch gekennzeichnet, dass** der Bolzen (6) gegenüber dem Hakenkörper (2) feststehend angeordnet ist oder dass der Bolzen (6) relativ zu dem Hakenkörper (2) schwenkbar angeordnet ist.

## Claims

1. Hook (1), in particular for safety devices such as fall-arrest sliders, having a hook body (2), which has a hook opening (3) forming an access to the inner region for hooking-in purposes, and
having a closure part (5), which comprises a bolt (6) and a sliding sleeve (7) which can be displaced in the axial direction of the bolt (6), wherein the bolt (6) is connected at its one end to the one end (8) of the hook body (2) which bounds the hook opening (3) and
the hook opening (3) can be closed by the sliding sleeve (7) being moveable in the axial direction of the bolt (6),
wherein, in the closure position, the free end (25) of the sliding sleeve (7) engages in the other end of the hook body (2) which bounds the hook opening (3) and/or wherein, in the closure position, the free end (25) of the sliding sleeve (7) engages around the other end of the hook body (2) which bounds the hook opening (3),
wherein at least some of the movements of the sliding sleeve (7) from the open position into the closure position are assisted by at least one spring element (24, 27) which is subjected to stressing by the displacement movement of the sliding sleeve (7) to the open position thereof such that, in the open position, the at least one spring element (24) subjects the sliding sleeve (7) to a force at least in the axial direction of the sliding sleeve (7),
**characterized**
**in that** the sliding sleeve (7) has a cam element (19) and the bolt (6) comprises at least two axially running cam surfaces (21, 23), which are offset in the circumferential direction of the bolt (6) and along which the cam element (19) slides,
wherein the one cam surface (21) is assigned to the cam element (19) during transfer of the sliding sleeve (7) from the locking position into the closure position of the sliding sleeve (7) and, following rotation of the sliding sleeve (7) about the axis (20) of the bolt (6), the other cam surface (23) is assigned to the cam element (19) during transfer of the sliding sleeve (7) from the closure position into the open position.

2. Hook according to Claim 1, **characterized in that** the cam surfaces (21, 23) are formed by flattened surfaces on the outer circumference of the bolt (6) .

3. Hook according to Claim 1 or 2, **characterized in that** the cam element (19) projects beyond part of the inner cross section of the sliding sleeve (7).

4. Hook according to Claim 3, **characterized in that** the cam element is formed by a pin (19).

5. Hook according to one of Claims 1 to 4, **characterized in that** the cam surface (21), which is assigned to the sliding sleeve (7) during transfer from the locking position into the closure position, has a length, as seen in the axial direction of the bolt (6), which is greater than the thickness of the cam element (19) in this axial direction, and/or **in that** the length of the cam surface (21) is at least double the thickness of the cam element (19) in the axial direction.

6. Hook according to one of Claims 1 to 4, **characterized in that** the other cam surface (23), which is assigned to the sliding sleeve (7) in the open position, is of a helical design.

7. Hook according to one of Claims 1 to 6, **characterized in that** the length of the other cam surface (23), as seen in the direction of the bolt (6), corresponds at least to the extent of the hook opening (3) in the open position of the sliding sleeve (7).

8. Hook according to one of Claims 1 to 7, **characterized in that** the planes of the two cam surfaces (21, 23), as seen in the circumferential direction of the bolt (6), enclose an angle of approximately 90° at least in the region in which the cam element (19) is in abutment in the open position and the locking position.

9. Hook according to one of Claims 1 to 8, **characterized in that** the at least one spring element (24) is a compression spring, which is supported on the bolt (6) and forces the sliding sleeve (7) into the closure position.

10. Hook according to one of Claims 1 to 9, **characterized in that** at least one spring element (27) is subjected to stressing when the sliding sleeve (7), starting from the closure position, is rotated about the axis (20) of the bolt (6), and/or **in that** the at least one spring element (27) is formed by a helical spring, one end of which is anchored on the bolt (6) and the other end of which is anchored on the sliding sleeve (7), and/or **in that** the at least one spring element (27) is formed by a helical spring (27) which is arranged around the bolt (6).

11. Hook according to one of Claims 1 to 10, **characterized by** the provision of a spring element (24, 27) which is subjected to stressing both in the radial direction, when the sliding sleeve (7) is rotated about the axis (20) of the bolt (6) from the closure position, and in the axial direction, when the sliding sleeve (7) is displaced in the axial direction of the bolt (6) from the closure position into the open position.

12. Hook according to one of Claims 1 to 11, **characterized in that**, in the closure position, the free end (25) of the sliding sleeve (7) is coupled mechanically to the other end of the hook body (2) which bounds the hook opening (3).

13. Hook according to one of Claims 1 to 12, **characterized in that** a locking means which locks in relation to the associated end (10) of the hook body (2) which bounds the hook opening (3) when the sliding sleeve (7) is rotated about the axis (20) of the bolt (6) is provided at the free end (25) of the sliding sleeve (7).

14. Hook according to Claim 13, **characterized in that** the locking means is formed by a locking pin, which is inserted into the sliding sleeve (7) such that it penetrates the lateral surface of the latter in a plane perpendicular to the axis (20) of the bolt (6) such that the free opening cross section of the sliding sleeve (7) is flattened.

15. Hook according to one of Claims 1 to 14, **characterized in that** the bolt (6) is arranged in a fixed state in relation to the hook body (2), or **in that** the bolt (6) is arranged such that it can be pivoted relative to the hook body (2).

## Revendications

1. Crochet (1), en particulier pour des dispositifs de sécurité tels que des glissières de sécurité, comprenant un corps de crochet (2) qui présente une ouverture de crochet (3) servant d'accès à la région intérieure en vue de l'accrochage, et comprenant une partie de fermeture (5) qui comprend un boulon (6) ainsi qu'un manchon coulissant (7) pouvant coulisser dans une direction axiale du boulon (6),
le boulon (6) étant connecté à l'une de ses extrémités à l'extrémité (8) du corps de crochet (2) limitant l'ouverture de crochet (3) et l'ouverture de crochet (3) pouvant être fermée en déplaçant le manchon coulissant (7) dans la direction axiale du boulon (6),
dans lequel, dans la position de fermeture, l'extrémité libre (25) du manchon coulissant (7) vient en prise dans l'autre extrémité du corps de crochet (2) limitant l'ouverture de crochet (3) et/ou dans lequel, dans la position de fermeture, l'extrémité libre (25) du manchon coulissant (7) vient en prise autour de l'autre extrémité du corps de crochet (2) limitant l'ouverture de crochet (3),
dans lequel au moins une partie des mouvements du manchon coulissant (7) depuis la position d'ouverture dans la position de fermeture est assistée par au moins un élément de ressort (24, 27) qui est tendu par le mouvement de coulissement du manchon coulissant (7) dans sa position d'ouverture de telle sorte que l'au moins un élément de ressort (24) exerce, dans la position d'ouverture, au moins dans la direction axiale du manchon coulissant (7), une force sur le manchon coulissant (7),
**caractérisé en ce que**
le manchon coulissant (7) présente un élément de came (19) et le boulon (6) comprend au moins deux surfaces de came (21, 23) s'étendant dans la direction axiale, lesquelles sont décalées dans la direction périphérique du boulon (6) et sur lesquelles glisse l'élément de came (19),
l'une des surfaces de came (21) étant associée à l'élément de came (19) pendant le transfert du manchon coulissant (7) de la position de verrouillage dans la position de fermeture du manchon coulissant (7) et après une rotation du manchon coulissant (7) autour de l'axe (20) du boulon (6), l'autre surface de came (23) étant associée à l'élément de came (19) pendant le transfert du manchon coulissant (7) de la position de fermeture dans la position d'ouverture.

2. Crochet selon la revendication 1, **caractérisé en ce que** les surfaces de came (21, 23) sont formées par des surfaces aplaties à la périphérie extérieure du boulon (6).

3. Crochet selon la revendication 1 ou 2, **caractérisé en ce que** l'élément de came (19) fait saillie au-delà d'une partie de la section transversale interne du manchon coulissant (7).

4. Crochet selon la revendication 3, **caractérisé en ce que** l'élément de came est formé par une goupille (19).

5. Crochet selon l'une quelconque des revendications 1 à 4, **caractérisé en ce que** la surface de came (21) qui est associée au manchon coulissant (7) lors du transfert de la position de verrouillage dans la position de fermeture présente, vu dans la direction axiale du boulon (6), une longueur qui est supérieure à l'épaisseur de l'élément de came (19) dans cette direction axiale et/ou **en ce que** la longueur de la surface de came (21) vaut au moins le double de l'épaisseur de l'élément de came (19) dans la direction axiale.

6. Crochet selon l'une quelconque des revendications 1 à 4, **caractérisé en ce que** l'autre surface de came (23) qui est associée au manchon coulissant (7) dans la position d'ouverture est réalisée sous forme enroulée.

7. Crochet selon l'une quelconque des revendications 1 à 6, **caractérisé en ce que** la longueur de l' autre surface de came (23), vu dans la direction du boulon (6), correspond au moins à la largeur d'ouverture de l'ouverture de crochet (3) dans la position d'ouverture du manchon coulissant (7).

8. Crochet selon l'une quelconque des revendications 1 à 7, **caractérisé en ce que** les plans des deux surfaces de came (21, 23), vu dans la direction périphérique du boulon (6), au moins dans la région dans laquelle s'applique l'élément de came (19) dans la position d'ouverture et dans la position de verrouillage, forment un angle d'environ 90°.

9. Crochet selon l'une quelconque des revendications 1 à 8, **caractérisé en ce que** l'au moins un élément de ressort (24) est un ressort de compression qui s'appuie contre le boulon (6) et qui presse le manchon coulissant (7) dans la position de fermeture.

10. Crochet selon l'une quelconque des revendications 1 à 9, **caractérisé en ce qu'**au moins un élément de ressort (27) est tendu lorsque le manchon coulissant (7) est tourné à partir de la position de fermeture autour de l'axe (20) du boulon (6) et/ou **en ce que** l'au moins un élément de ressort (27) est formé par un ressort à boudin, dont une extrémité est ancrée au boulon (6) et dont l'autre extrémité est ancrée au manchon coulissant (7) et/ou **en ce que** l'au moins un élément de ressort (27) est formé par un ressort à boudin (27) qui est disposé autour du boulon (6).

11. Crochet selon l'une quelconque des revendications 1 à 10, **caractérisé en ce qu'**un élément de ressort (24, 27) est prévu, lequel est tendu à la fois dans la direction radiale, lorsque le manchon coulissant (7) est tourné à partir de la position de fermeture autour de l'axe (20) du boulon (6), et dans la direction axiale lorsque le manchon coulissant (7) est coulissé dans la direction axiale du boulon (6) de la position de fermeture dans la position d'ouverture.

12. Crochet selon l'une quelconque des revendications 1 à 11, **caractérisé en ce que** dans la position de fermeture, l'extrémité libre (25) du manchon coulissant (7) est accouplée mécaniquement à l'autre extrémité du corps de crochet (2) limitant l'ouverture de crochet (3).

13. Crochet selon l'une quelconque des revendications 1 à 12, **caractérisé en ce qu'**à l'extrémité libre (25) du manchon coulissant (7) est prévu un verrouillage qui se verrouille avec l'extrémité associée (10) du corps de crochet (2) limitant l'ouverture de crochet (3) lorsque le manchon coulissant (7) est tourné autour de l'axe (20) du boulon (6).

14. Crochet selon la revendication 13, **caractérisé en ce que** le verrouillage est formé par une goupille de verrouillage qui est insérée dans le manchon coulissant (7) de telle sorte qu'elle traverse sa surface d'enveloppe dans un plan perpendiculaire à l'axe (20) du boulon (6), de telle sorte que la section transversale d'ouverture libre du manchon coulissant (7) soit aplatie.

15. Crochet selon l'une quelconque des revendications 1 à 14, **caractérisé en ce que** le boulon (6) est disposé de manière fixe par rapport au corps de crochet (2) ou **en ce que** le boulon (6) est disposé de manière à pouvoir pivoter par rapport au corps de crochet (2).
